Europäisches Patentamt

European Patent Office

Office européen des brevets

(19)

(11) Veröffentlichungsnummer: **0 258 778**
B1

(12) # EUROPÄISCHE PATENTSCHRIFT

(45) Veröffentlichungstag der Patentschrift:
31.10.90

(51) Int. Cl.⁵: **E06B 3/80**, B65G 69/00

(21) Anmeldenummer: 87112268.5

(22) Anmeldetag: 25.08.87

(54) **Verformbare Dichtung des Spaltes zwischen dem Rand einer Gebäudeöffnung und dem Heck eines an diese herangefahrenen Fahrzeuges.**

(30) Priorität: 02.09.86 DE 3629787

(43) Veröffentlichungstag der Anmeldung:
09.03.88 Patentblatt 88/10

(45) Bekanntmachung des Hinweises auf die Patenterteilung:
31.10.90 Patentblatt 90/44

(84) Benannte Vertragsstaaten:
AT BE CH DE ES FR GB GR IT LI LU NL SE

(56) Entgegenhaltungen:
DE-C- 3 432 543
US-A- 3 322 132
US-A- 3 403 489

(73) Patentinhaber: Alten, Kurt, Ringstrasse 14,
D-3015 Wennigsen(DE)

(72) Erfinder: Alten, Kurt, Ringstrasse 14,
D-3015 Wennigsen(DE)

(74) Vertreter: Depmeyer, Lothar, Auf der Höchte 30,
D-3008 Garbsen 1(DE)

ACTORUM AG

**Beschreibung**

Die Erfindung geht aus von einer Dichtung nach dem Oberbegriff des 1. Patentanspruches.

Die seitlichen Schürzenabschnitte müssen elastisch nachgiebig ausgeführt sein und sich in ausreichendem Masse der Aussenkontur des Fahrzeuges anpassen können. Diese Forderung ist oft deshalb schwierig zu erfüllen, weil die Fahrzeuge von unterschiedlicher Gestalt sind und zudem unterschiedlich weit an das Gebäude heranfahren. Bei Federzügen, die am oberen Rand der Schürzenabschnitte angreifen (siehe z.B. DE-C 3 432 543), kann indessen die Federung nicht so eingestellt werden, dass die obigen Forderungen erfüllt werden können, weil Federhub und Federsteifigkeit nicht optimal eingestellt bzw. gewählt werden können.

Durch die Erfindung sollen diese Nachteile beseitigt werden.Demgemäss soll durch die Erfindung eine Dichtung geschaffen werden, die bei weitgehend konturverschiedenen Fahrzeugen unterschiedlichen Abstandes vom Gebäude sehr wirksam ist.

Zur Lösung dieser Aufgabe sind erfindungsgemäss die seitlichen Schürzenabschnitte an ihrem oberen Rand mit einem schwenkbaren Tragarm verbunden, der in der Nähe der seitlichen Schenkel um eine parallel zu den Schenkeln verlaufende Achse verschwenkbar gelagert ist. Dabei sind zweckmässigerweise die beiden Tragarme untereinander durch einen Federzug verbunden. Zudem ist vorteilhafterweise zwischen den Enden der Tragarme und den Schürzenabschnitten eine Zugfeder vorgesehen.

Die gegen die Wirkung einer Rückstellkraft bewegbaren Tragarme erlauben eine vergleichsweise grosse Nachgiebigkeit der Schürzenabschnitte; die Tragarme können elastisch nachgiebig nach hinten ausweichen; zugleich können sich die Schürzenabschnitte wiederum in sich verformen, um sich den unterschiedlichen Konturen der Fahrzeuge anpassen zu können. Diese Verformbarkeit ist aufgrund der Tragarme auch dann gegeben, wenn die Fahrzeuge relativ weit an das Gebäude herangefahren sind.

Weitere Einzelheiten der Erfindung werden anhand der Zeichnung erläutert, in der Ausführungsbeispiele der Erfindung dargestellt sind. Es zeigen :

Fig. 1 eine Teilansicht einer Dichtung nach dem Oberbegriff des Anspruchs 1,

Fig. 2 einen Schnitt nach der Linie II - II von Fig. 1 und

Fig. 3 eine Einzelheit aus Fig. 1 in der Ansicht, und zwar unter Fortlassung des sich quer erstreckenden Schürzenabschnittes.

Ein Gebäude 1 hat eine Öffnung 2, an die Fahrzeuge mit dem Heck zum Be- und Entladen herangefahren werden können. Die Öffnung 2 ist von einem u-förmigen Rahmen 3 umschlossen, der fest mit dem Gebäude 1 verbunden ist und einen waagerechten, oberhalb der Öffnung 2 befindlichen Steg 4 und zu beiden Seiten der Öffnung 2 befindliche Schenkel 5 hat. An den Schenkeln 5 sind Lenker 6 angelenkt, die mit ihrem freien Ende mit den senkrechten Schenkeln 7 aus U-Eisen eines ebenfalls u-förmigen, steifen Rahmens 8 mit einem waagerechten Steg 9 verbunden sind. Die Rahmen 3, 8 stimmen bezüglich ihrer Grösse überein; der Rahmen 8 kann sich aufgrund der Lenker 6, die auch längenveränderbar sein können, in Richtung auf das Gebäude 1 bewegen, wenn eine Beaufschlagung durch ein Fahrzeug erfolgt.

An dem Steg 9 und den beiden Schenkeln 7 ist eine biegsame, dauerhafte, folienartige Schürze befestigt, die sich an die Gestalt des Fahrzeuges anpassen kann. Diese Schürze besteht aus zwei senkrechten Streifen 1o und einem oberen, waagerecht verlaufenden Streifen 11. Die Streifen 1o enden im Abstand vom Steg 9, sind aber auf ihrer gesamten Länge seitlich aussen mit den Schenkel 7 verbunden. Der Streifen 11 steht mit seinem oberen Rand mit dem Steg 9 in fester Verbindung.Im übrigen hängt er frei herab.

Die beiden Rahmen 3, 8 sind durch einen Bespannstoff verbunden. Dessen Seitenteile sind mit 12 bezeichnet; der obere, als Dach wirkende Abschnitt 21 verbindet die Stege 4 und 9 miteinander.

Nahe oberhalb des oberen Randes der Streifen 11 ist an den Schenkeln 7 ein sich nach innen erstreckender Tragarm 12 mittels Scharnier 13 an dem zugehörigen Schenkel 7 schwenkbar gelagert. Die Schwenkachse verläuft parallel zum Schenkel 7 bzw. waagerecht. Die Länge des Tragarmes 12 entspricht derjenigen der Breite der Streifen 1o, die vom freien Ende des Tragarmes 12 hinweg über eine Zugfeder 14 aufgehängt sind, und zwar über ein Auge 15, das sich in der freien Ecke des Streifens 11 am oberen Randbereich befindet. Darüber hinaus sind die freien Enden der beiden Tragarme 12 über einen Seilzug 16 mit zwischengeschalteter Zug-feder 17 miteinander verbunden. Alle diese Einrichtungen sind von dem vorne liegenden Streifen 11 überdeckt, also von aussen her nicht sichtbar.

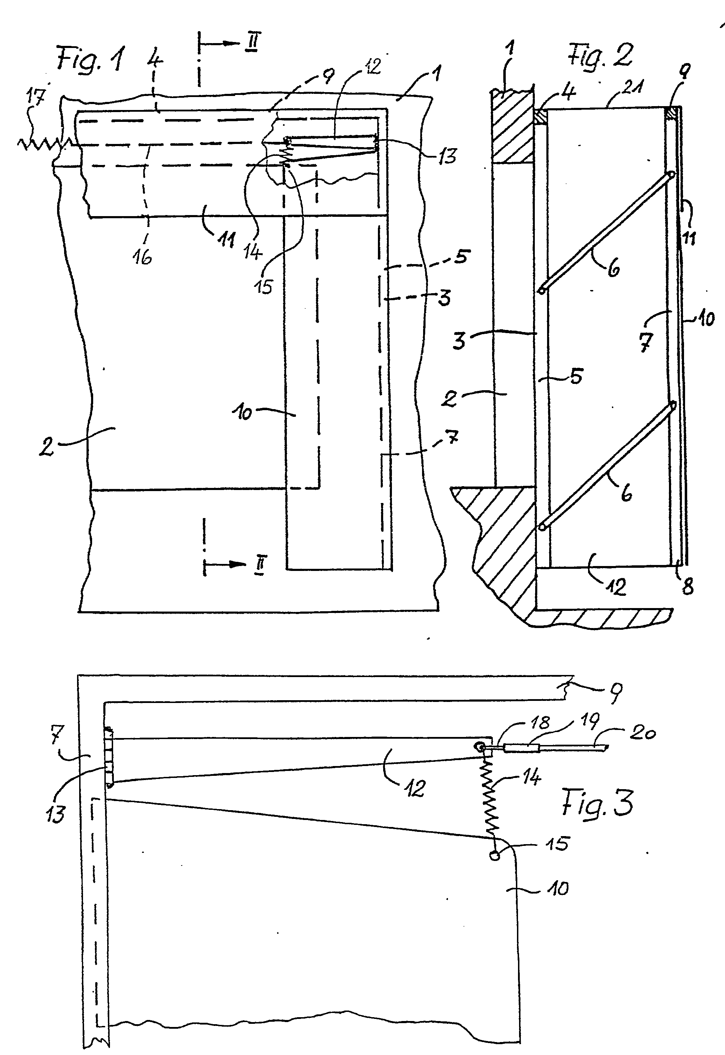

Bei der Ausführungsform gemäss Fig. 3 ist der Seilzug 16 mit Zugfeder 17 durch ein kurzes Anschlussstück 18 mit Klemme 19 und sich dann anschliessender Gummizugfeder 2o ersetzt, die sich praktisch über den gesamten freien Raum zwischen den beiden Tragarmen 12 erstreckt und daher auch eine grosse Länge bzw. Weichheit aufweist.

Trifft ein Fahrzeug mit seinem Heck auf die Dichtung bzw. seine Schürze auf, so kann diese aufgrund der Lenker um ein gewisses Mass nachgeben. Ausserdem schmiegt sich die Schürze an die Aussenhaut des Fahrzeuges an und dichtet den Innenraum nach aussen hin ab. Dabei können die Tragarme 12 gegen die Wirkung der Zugfedern 17, 2o nach innen in Richtung auf das Gebäude 1 schwenken, wobei sich die Streifen 1o wiederum unter Dehnung der Zugfeder 14 für sich in Richtung auf das Gebäude 1 verformen können. Ist das Fahrzeug abgezogen, wird die Dichtung aufgrund ihrer Federn wieder so verformt, dass die Schürze in ihre ebene Lage parallel zum Gebäude 1 zurückkehrt. Im übrigen ist nunmehr die Dichtung so weich und anschmiegsam, dass auch bei rauhem Betrieb weder die Schürze noch das Fahrzeug beschädigt werden können.

## Patentansprüche

1. Verformbare Dichtung des Spaltes zwischen dem Rand einer Gebäudeöffnung (2) und dem Heck eines an diese herangefahrenen Fahrzeuges mit einer Schürze, die seitlich und oben an einem im Abstand von dem Gebäude (1) angeordneten und vorzugsweise auch in Richtung auf das Gebäude bewegbaren, unten offenen, u-förmigen Rahmen (8) befestigt ist, wobei die beiden Schenkel (7) des Rahmens zur Halterung der seitlichen Schürzenabschnitte (10) und der waagerechte, oben liegende Steg (9) dieses Rahmens zur Halterung des oberen, sich quer erstreckenden Schürzenabschnittes (11) dienen und wobei weiterhin die seitlichen Schürzenabschnitte durch eine an ihrem oberen Rand angreifende Rückstellkraft türartig, elastisch nachgiebig eindrückbar sind, dadurch gekennzeichnet, dass die seitlichen Schürzenabschnitte (1o) an ihrem oberen Rand mit einem Tragarm (12) verbunden sind, der in der Nähe der seitlichen Schenkel (7) um eine parallel zu diesem Schenkel verlaufende Achse schwenkbar gelagert ist.

2. Dichtung nach Anspruch 1, dadurch gekennzeichnet, dass die beiden Tragarme (12) durch eine Zugfeder (17,2o) verbunden sind.

3. Dichtung nach Anspruch 1, dadurch gekennzeichnet, dass der obere Rand der seitlichen Schürzenabschnitte über eine Zugfeder (14) mit dem Tragarm (12) verbunden sind.

4. Dichtung nach Anspruch 1, dadurch gekennzeichnet, dass die Länge der Tragarme (12) praktisch der Breite der seitlichen Schürzenabschnitte (1o) entspricht.

5. Dichtung nach Anspruch 3, dadurch gekennzeichnet, dass die Zugfedern (14) am freien Ende der Tragarme (12) und der freien oberen Ecke der seitlichen Schürzenabschnitte (1o) angreifen.

6. Dichtung nach Anspruch 2, dadurch gekennzeichnet, dass sich die an den Tragarmenden angreifende Zugfeder (2o) im wesentlichen über den freien Abstand zwischen den beiden Tragarmenden erstreckt.

7. Dichtung nach Anspruch 6, dadurch gekennzeichnet, dass die Zugfeder (2o) eine Gummistrangfeder ist.

## Claims

1. Deformable seal for sealing the gap between the edge of an opening (2) in a building and the rear of a vehicle which is reversed up to said opening, comprising a guard, which is secured at its lateral and upper ends to a U-shaped frame (8), which is spaced from the building (1) and is preferably also displaceable in the direction of the building, the lower end of said frame being open, the two side-pieces (7) of the frame serving to retain in position the lateral guard portions (10), and the horizontal crosspiece member (9) situated at the upper end of this frame serving to retain in position the upper, transversely extending guard portion (11) and, moreover, the lateral guard portions being elastically resiliently compressible in a door-like manner as a result of resiliency being applied to their upper edges, characterised in that the lateral guard portions (10) are connected, at their upper edge, to a supporting arm (12), which is mounted in the vicinity of the side-pieces (7) so as to be pivotable about an axis extending parallel to this side-piece.

2. Seal according to claim 1, characterised in that the two supporting arms (12) are connected by means of a tension spring (17, 20).

3. Seal according to claim 1, characterised in that the upper edge of the lateral guard portions is connected to the supporting arm (12) by a tension spring (14).

4. Seal according to claim 1, characterised in that the length of the supporting arm (12) virtually corresponds to the width of the lateral guard portions (10).

5. Seal according to claim 3, characterised in that the tension springs (14) engage with the free ends of the supporting arms (12) and the free, upper corners of the lateral guard portions (10).

6. Seal according to claim 2, characterised in that the tension spring (20), which engages with the ends of the supporting arms, extends substantially over the free spacing between the two ends of the supporting arm.

7. Seal according to claim 6, characterised in that the tension spring (20) is a rubber extrusion spring.

## Revendications

1. Dispositif déformable pour rendre étanche l'intervalle entre le bord d'une baie de bâtiment (2) et l'arrière d'un véhicule automobile qui en est rapproché, comprenant une jupe fixée, latéralement et en haut, à un cadre (8) en forme de U, ouvert vers le bas, disposé à distance du bâtiment (1) et, de préférence, susceptible d'être déplacé en direction du bâtiment, les deux jambages (7) du cadre servant à maintenir les parties latérales (10) de la jupe et l'âme (9) horizontale en haut de ce cadre à maintenir la partie (11), supérieure et s'étendant transversalement, de la jupe, les parties latérales de la jupe pouvant être enfoncées, en cédant élastiquement à la manière d'une porte, par une force de rappel s'appliquant à son bord supérieur, caractérisé en ce que les parties latérales (10) de la jupe sont reliées à leur bord supérieur à une console (12) montée basculante, à proximité du jambage (7) latéral, autour d'un axe s'étendant parallèlement à ce jambage.

2. Dispositif d'étanchéité suivant la revendication 1, caractérisé en ce que les deux consoles (12) sont reliées par un ressort de traction (17, 20).

3. Dispositif d'étanchéité suivant la revendication 1, caractérisé en ce que le bord supérieur des parties latérales de la jupe est relié à la console (12) par un ressort de traction (14).

4. Dispositif d'étanchéité suivant la revendication 1, caractérisé en ce que la longueur des consoles (12) correspond pratiquement à la largeur des parties latérales (10) de la jupe.

5. Dispositif d'étanchéité suivant la revendication 3, caractérisé en ce que les ressorts de traction (14) attaquent l'extrémité libre des consoles (12) et le sommet supérieur libre des parties latérales (10) de la jupe.

6. Dispositif d'étanchéité suivant la revendication 2, caractérisé en ce que le ressort de traction (20), attaquant les extrémités des consoles, s'étend sensiblement sur l'intervalle libre compris entre les deux extrémités des consoles.

7. Dispositif d'étanchéité suivant la revendication 6, caractérisé en ce que le ressort de traction (20) est un ressort à boudin en caoutchouc.

EP 0 258 778 B1

Fig. 1

Fig. 2

Fig. 3